# EUROPEAN PATENT SPECIFICATION

(11) **EP 2 913 440 B1**
(45) Date of publication and mention of the grant of the patent: **28.07.2021**
(21) Application number: 13809105.3
(22) Date of filing: 28.06.2013
(51) Int. Cl.: E04C 1/39, A01G 9/02

(54) **CEMENT-BASED MULTILAYER ASSEMBLY THAT CAN BE USED AS A BIOLOGICAL SUPPORT FOR BUILDING FACADES OR OTHER STRUCTURES**
ZEMENTBASIERTE MEHRSCHICHTANORDNUNG ALS BIOLOGISCHE UNTERLAGE FÜR GEBÄUDEFASSADEN ODER ANDERE STRUKTUREN
ENSEMBLE MULTICOUCHE À BASE DE CIMENT, À UTILISER EN TANT QUE SUPPORT BIOLOGIQUE POUR FAÇADES D'ÉDIFICES OU D'AUTRES CONSTRUCTIONS

(30) Priority: 28.06.2012 ES 201231002 P
(43) Date of publication of application: 02.09.2015
(73) Proprietor: Universitat Politècnica De Catalunya, 08034 Barcelona (ES)
(72) Inventor: MANSO BLANCO, Sandra, E-08034 Barcelona (ES); SEGURA PÉREZ, Ignacio, E-08034 Barcelona (ES); AGUADO DE CEA, Antonio, E-08034 Barcelona (ES)
(74) Representative: Juncosa Miró, Jaime
(86) International application number: PCT/ES2013/070438
(87) International publication number: WO 2014/001594

(56) References cited:
- EP-A1- 2 520 730
- WO-A1-2008/082155
- DE-B1- 2 920 700
- TW-A- 201 128 035
- DATABASE WPI Week 200221 Thomson Scientific, London, GB; AN 2002-160304 XP002758103, -& JP 2002 000077 A (OKUMURA CORP) 8 January 2002 (2002-01-08)
- OTTEL GBP E M ET AL: "CONCRETE AS A MULTIFUNCTIONAL ECOLOGICAL BUILDING MATERIAL: A new approach to green our environment", JOURNAL OF INTERNATIONAL SCIENTIFIC PUBLICATION: ECOLOGY & SAFETY, SCIENCE EVENTS LTD, BULGARIA , vol. 4, no. Pt. 1 1 January 2010 (2010-01-01), pages 224-235, XP008179674, ISSN: 1313-2563 Retrieved from the Internet: URL:http://www.scientific-publications.net /download/ecology-and-safety-2010-1.html
- OTTELE ET AL.: 'CONCRETE AS A MULTIFUNCTIONAL ECOLOGICAL BUILDING MATERIAL: A new approach to green our environment.' JOURNAL OF INTERNATIONAL SCIENTIFIC PUBLICATION: ECOLOGY &SAFETY vol. 4, 2010, pages 224 - 235, XP008179674
- OTTELE ET AL.: 'Comparative life cycle analysis for green facades and living wall systems.' ENERGY AND BUILDINGS vol. 43, 2011, pages 3419 - 3429, XP028104134
- None

## Description

### Object of the Invention

As expressed in the title of the present specification, the invention relates to a cement-based multilayer assembly that can be used as a biological support for building facades or other structures, contributing to the function for which it is intended several advantages and novelty features that will be described in detail below and involve a significant improvement with respect to the current state of the art in its field of application.

More particularly, the object of the invention focuses on an assembly or a constructive system based on a low pH hydraulic binder, the main function of which is to serve as a biological support for the growth and development of specific biological organisms, specifically certain families of cyanophytes, chlorophytes and bryophytes, for implementing it in areas of interest in a building or structure as an ornamental element.

Said support is particularly designed for controlling growth of the mentioned biological organisms in the areas of interest, for which purpose it is configured as an assembly of several layers which allow capturing rainwater, storing it in the inner microstructure of the material together with the nutrient supply for the biological organisms and controlling the surface the organisms will colonize and on which said organisms will grow, the method and material used to prevent water loss from the structure and to demarcate the areas of growth of the organisms being of great importance.

### Field of Application of the Invention

The field of application of the present invention is encompassed within the industrial sector dedicated to construction, and more specifically to the design, development, manufacture and installation of ornamental systems for constructive elements.

### Background of the Invention

The need to incorporate green spaces in cities is a well-known fact, the incorporation of said spaces in buildings themselves being a practice that is on the rise worldwide. In this regard, the existing types are green roofs and vertical gardens; as a reference to the state of the art, they are fundamentally based on using a plant substrate contained in some type of container or by means of types of cultivation that are completely independent of the substrate, such as hydroponic cultivation.

At the level of green roofs, there are various sub-categories differing mainly in the amount of substrate used, and therefore in the thickness of the layer of substrate that will be located on the roof of the building. This will basically depend on the type of vegetation to be incorporated and on the use to be made of said roof at the level of passability.

On the other hand, in the case of vertical gardens, also known as green facades, there are two major groups based on whether or not the plant structure depends on the substrate. Therefore, the most extreme case of substrate dependence will be that in which containers are manufactured in the vertical structure housing the plant substrate and the corresponding organisms, and the case of complete substrate independence will correspond to hydroponic systems.

Hydroponic systems refer to those systems in which plant roots do not take root in a substrate but rather directly receive a nutritive solution that provides them with the necessary water and nutrients. However, the fact that it does not require a plant substrate does not mean that structures supporting such systems are minimized.

All the aforementioned cases require complex auxiliary systems for the constructive element itself based on using different layers of material and even adjacent metal or plastic structures, as can be seen in documents US 2011/0094153, US 5555676A, US 7516574B2, US 4295296, US D645166S AU2010219378A1, EP2335473A1 or FR2949531A1, among many others. This entails complications associated with additional loads as well as a limited integration with the environment. Furthermore, for the particular case of vertical gardens, the light going through windows decreases.

Document JP2002000077 describe a porous concrete panel for plant growing superimposed on a water retention mat. This document is silent about the pH properties of the porous concrete panel.

Therefore, despite the techniques existing in this field, the need for new contributions reducing the issues mentioned in the preceding paragraph stands out. For this reason the present invention provides the possibility to progress in this regard, achieving direct growth from the proposed multilayer assembly by complying with the basic pH requirement of the substrate material and by providing properties having high value-added properties.

The need to design a system which allows creating a new vertical garden concept, not only for newly built elements but also for restoration of pre-existing elements, based on commercial products is evidenced by the innovative approach and improvements it provides with respect to current systems. In any case, it must be pointed out that at least the applicant is unaware of the existence of other inventions having a similar use which, when considered separately or in combination, present technical, structural and constitutive features similar to those of the cement-based multilayer assembly that can be used as a biological support for building facades or other structures proposed and claimed herein.

### Brief Description of the Invention

Specifically, as indicated above the multilayer assembly proposed by the invention is a biological support system designed for being used as a decorative element and/or a sustainable landscape integration system having constructive elements allowing the colonization, adhesion and growth of organisms in specific areas of its surface, such that greater integration with the environment is possible. The invention is disclosed in claim 1.

Said assembly is based on a multilayer arrangement which allows integrating different functionalities, such that an end product with a range of uses in constructive elements is obtained. Unlike current systems, the proposed assembly proposes biological growth on the support material itself, and therefore without needing complex bearing structures, furthermore being selective and non-comprehensive, such that the support will play a key role and allow a wide range of designs as it has preferred growth areas where conditions will be those suitable for growth.

To that end and specifically, the assembly comprises the following layers:
- A structural layer corresponding to the layer functioning as a structural support for the building or corresponding structure and complying with the specified project requirements in each case.
- A waterproofing anchoring layer located on the structural layer acting as an interface or intermediate layer and the functions of which will be anchoring and/or waterproofing. More specifically, this interface must improve the anchoring between the structural and biological layers, if necessary, and furthermore serve as protection against the passage of water towards the structural layer to prevent it from being able to cause deterioration in said layer due to framework corrosion or other conditions, therefore also performing a waterproofing function.
- A biological layer for colonization, adhesion, and water retention to favor biological growth of various families of organisms. This layer has biological support and water retention functions, which therefore allows having a water reservoir for the organisms cultivated on the surface thereof. As a result, the material from which this layer is made, as will be described below, must therefore comply with the pH, surface roughness and porosity requirements considered necessary.
- And finally a waterproofing cladding layer acting selectively, allowing water to enter but not come out of the material. This layer is therefore a transfer layer the functions of which focus on absorbing, aiding in retaining and directing the exit of water from the biological layer. It is important to point out that this last layer has the particularity of being discontinuous and not completely covering the biological layer, i.e., it has a series of cavities leaving the layer immediately below it, i.e., the biological layer, exposed. Water will therefore be captured through the entire surface, redirecting the exit thereof through areas in which the biological layer is in direct contact with the environment, aiding in retaining it, and these areas will be those in which biological growth is favored.

There are basically two reasons for differentiating two areas on the surface of the system: to try to control the exit of water such that for water to exit, it must be forced through the colonizable area, thus maintaining certain humidity in the colonizable area, and to achieve visually homogeneous growth by reducing said area. Concretes are usually heterogeneous materials and this entails small variations in the physicochemical characteristics thereof. By reducing the biological growth area, said heterogeneities can be counteracted and a more appealing visual appearance can thus be produced.

Once the main functions of each of the layers forming the assembly of the invention have been specified, it is important to describe the actual aspects of the material forming each of said layers as well as data characteristic of same.

There is no assessment or proposal whatsoever for the structural layer given that, as indicated, it will comply with the specified project requirements in each case and be formed in any case by reinforced concrete or concrete with structural fibers. Nevertheless, it must be highlighted that this layer can be a newly installed layer or an already existing layer, using the proposal as a restoration method for an already existing layer.

For the anchoring layer, materials ranging from conventional mortar-type material to resins can be used. The variables to be taken into account for selecting the material are basically the thermal processes of the structural and biological layers. This will depend on whether or not the materials forming said layers are the same, as will be seen below. In addition, the material of this layer must have certain waterproofing properties to prevent damage in the structural layer.

The biological layer is the most important layer of the assembly, and therefore has various particularities, as it will be formed by a low pH material comprised in a range of between 5.5 and 8 and will furthermore have the capacity to absorb and retain water. The thickness of the layer will be determined according to the region in which it is installed and the associated weather condition, being able to be between 3 and 5 cm. Likewise, the component contributing to stabilizing the distances between colonized areas is considered.

Therefore, in one embodiment option the material for this biological layer can be based on conventional cement with additives which allow reducing the pH without affecting the physicochemical and mechanical properties, whereas in another alternative option the composition thereof is based on using a hydraulic binder different from the conventional binder, i.e., magnesium phosphate cement, known as MPC. In both cases, the binder content will be comprised in the range of between 275 and 375 kg/m³.

In any case, regardless of the binder metering will be based on mortar or concrete with aggregates of the siliceous type and even some of the expanded clay type to improve water retention, and an additive from the boron family which on one hand allows reducing the pH of the material and on the other hand controlling reaction kinetics. It must also be pointed out that the maximum aggregate size will not exceed one quarter of the thickness of the layer itself.

More specifically, in the case of using conventional cement for producing the biological layer, an acidic additive, such as oxalic acid, which allows reducing pH of the mixture, must be selected, minimizing the impact that it may have on the physicochemical properties of the mixture. The additive content for the case of oxalic acid will be comprised between 10 and 13% with respect to the weight of the binder. The water/cement ratio will be stipulated according to the desired degree of porosity for the end material, being comprised in any case between 0.3 and 0.6.

On the other hand, if an MPC type binder is used the requirements will be different due to the different nature of the binder itself. This material has been used previously for other purposes that have given rise to different patents in the fields of construction, dentistry, waste stabilization or others.

For the present invention, the MPC-based hydraulic binder will be the result of mixing a phosphate source, i.e., ammonium dihydrogen phosphate (NH₄H₂PO₄), and a magnesium source, i.e., magnesium oxide (MgO), the proportions of which will range between phosphate:magnesium ratios of 1:1.5 and 1:2.5. As a result of this mixing, a material having a pH comprised between 6 and 8 is obtained, but due to its rapid setting nature, the addition of a retarder which allows controlling reaction kinetics is contemplated. For this and due to the ineffectiveness of retarder additives commonly used for conventional concrete, the use of boron compounds, such as boric acid or borax, also known as sodium tetraborate decahydrate, is established, the addition of which is comprised between 5 and 8%. It must be pointed out that the water/cement ratios for such binder will be comprised between 0.2 and 0.4.

Finally, the cladding layer will consist of a surface treatment based on unidirectional waterproofing. The corresponding material will include any of those products allowing the function of said layer.

Finally, it must be pointed out that the described multilayer assembly is envisaged for accommodating growth of different groups of organisms, including cyanophytes, chlorophytes and bryophytes, mainly from the Pottiaceae, Bryaceae and Hypnaceae families, but without this being a limitation.

In view of the foregoing, it can be stated that the described cement-based multilayer assembly that can be used as a biological support for building facades or other structures represents an innovative structure having features that have been unknown up until now for the purpose for which it is intended, which reasons, along with its practical usefulness, provide the assembly sufficient grounds to obtain the privilege of exclusivity sought.

### Description of the Drawings

To complement the description of the invention that is being made and to aid in better understanding the features distinguishing it, a set of drawings is attached to the present specification as an integral part thereof in which the following has been depicted with an illustrative and non-limiting character:

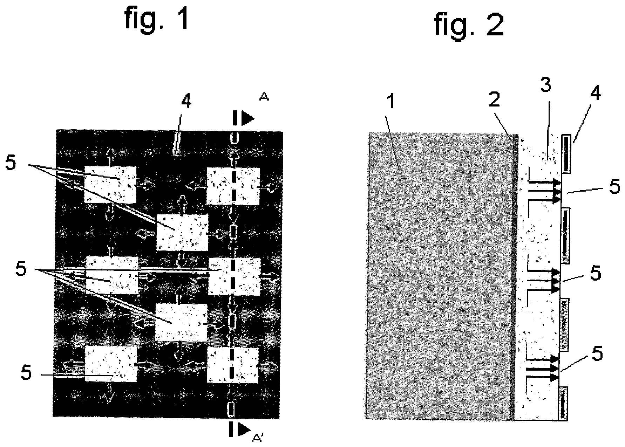

Figure 1 shows a schematic front elevational view of an embodiment of the cement-based multilayer assembly object of the invention, showing only the external cladding layer and portions of the biological layer in the cavities of the external cladding layer, the exit of water redirected through said cavities being depicted by means of arrows.
Figure 2 shows a schematic section view according to section A-A' indicated in Figure 1 of the multilayer assembly of the invention, clearly showing the configuration and arrangement of each of the layers it comprises, water circulation having been depicted by means of arrows like in the preceding figure.

### Preferred Embodiment of the Invention

A preferred embodiment of the invention comprising the parts and elements that will be described in detail below can be seen in view of the mentioned drawings and according to the reference numbers used.

Therefore, as seen in said drawings the assembly at hand comprises the following layers:
- a structural layer (1) occupying the innermost part of the assembly, being part of the building structure itself, and respecting project requirements in each particular case.
- a waterproofing anchoring layer (2) which is located on the structural layer (1) and allows adherence between the structural layer (1) and the biological layer (3) described below, preventing the passage of water to the structural layer (1), if necessary.
- a biological layer (3) made from a cement-based material or hydraulic binder suitable for colonization and adhesion of certain families of biological organisms, as well as for water retention to favor the growth of said organisms, for which purpose said material must comply with certain pH, surface roughness and porosity requirements.
- And a unidirectional waterproofing cladding layer (4) which, when superimposed on the biological layer (3), will allow absorbing, retaining and directing the exit of water from said layer (depicted by means of arrows in both Figure 1 and Figure 2). Furthermore, this cladding layer (4) has a series of cavities (5) in which said biological layer (3) is in direct contact with the environment, said areas being areas in which biological growth is favored.

In terms of the materials from which each of the mentioned layers is made, the structural layer (1) is formed by conventional reinforced concrete or concrete with structural fibers, and it will comply with the specified project requirements in each case, this layer being able to be newly installed or already existing.

The anchoring layer (2) can be made from conventional mortar or resins or any other material, whichever appropriate, and have waterproofing properties to prevent damage in the structural layer (1).

The biological layer (3) is made from mortar or concrete which can be produced based on conventional cement or an MPC cement (Magnesium-Phosphate Cement). In this layer, regardless of the type of binder used, the content thereof is comprised between 275 and 375 kg/m³, the water/cement ratio will be comprised between 0.3 and 0.6 for the case of a conventional cement and between 0.2 and 0.5 for the case of the MPC binder.

Furthermore, if the binder used is an MPC type binder, it will have a phosphate source and a magnesium source, said sources being ammonium dihydrogen phosphate and magnesium oxide, respectively, the phosphate-magnesium ratio being comprised between 1:1.5 and 1:2.5.

In the case of using conventional cement, it will include a retarder- or acid-type chemical additive which allows obtaining a pH comprised between 5.5 and 8 and furthermore controls reaction kinetics. Furthermore, for the case of oxalic acid, it will be found in percentages by weight of cement of between 10 and 13%, and for the case of compounds such as borax, of between 5 and 8%.

In any case, the mortar or concrete will include aggregates of the siliceous type and even expanded clays the maximum size of which does not exceed one quarter of the thickness of the layer.

Finally, the cladding layer (4) is made from any suitable material and is suitable for providing unidirectional waterproofing, i.e., preventing the exit of water to the outer part thereof and retaining it in the inner part.

Finally, it must be pointed out that the anchoring layer (2) and the cladding layer (4) are optional because even though the anchoring layer for attaching the biological layer (3) to the structural layer (1) and furthermore serving as an insulator, and the cladding layer (4) for acting as an element to retain water and demarcating the biological growth areas are incorporated in the preferred embodiment of the invention as functional elements of the assembly, in some cases they may not be essential or may be replaced with another type of element with the same anchoring or cladding function, respectively.

Having sufficiently described the nature of the invention as well as the manner of putting it into practice, it is not considered necessary to further describe the invention so that any person skilled in the art can comprehend the scope thereof and the advantages derived from it. It must be stated that it could be carried out to practice within its essential features as disclosed in the appended claims, in other embodiments differing in detail from that indicated by way of example, and such embodiments would be covered by the protection that is sought provided that the fundamental principle thereof is neither altered, changed nor modified.

## Claims

1. A cement-based multilayer assembly used as a biological support for building facades or other structures, comprising at least one conventional structural concrete layer (1) which complies with the specified project requirements and can optionally be newly-installed, and at least one biological layer (3) made from a cement-based material;
said cement-based material has a low pH comprised in a range of between 5.5 and 8 suitable for the colonization and adhesion of certain families of biological organisms and for water retention, and further comprising a waterproofing and anchoring layer (2) between the structural layer (1) and the biological layer (3);
**characterized in that**
the cement-based material with low pH comprised in a range of between 5.5 and 8 includes a retarder- or acid-type chemical additive which allows obtaining a pH comprised between 5.5 and 8 and furthermore controls reaction kinetics.

2. The cement-based multilayer assembly used as a biological support for building facades or other structures according to claim 1, **characterized in that** it further comprises at least one unidirectional waterproofing cladding layer (4) which is superimposed on the biological layer (3) and has cavities (5) in which the biological layer (3) is in direct contact with the environment.

3. The cement-based multilayer assembly used as a biological support for building facades or other structures according to claim 2, **characterized in that** the cladding layer (4) is made from a material suitable for providing unidirectional waterproofing.

4. The cement-based multilayer assembly used as a biological support for building facades or other structures according to any of claims 1-3, **characterized in that** the biological layer (3) is made from mortar or concrete produced based on a conventional cement, the content of which comprises between 275 and 375 kg/m³, and the water/cement ratio is comprised between 0.3 and 0.6.

5. The cement-based multilayer assembly used as a biological support for building facades or other structures according to any previous claim, **characterized in that** the acidic additive is oxalic acid found in percentages by weight of cement of between 10 and 13%, or borax, found in percentages by weight of cement of between 5 and 8%.

6. The cement-based multilayer assembly used as a biological support for building facades or other structures according to any of claims 1-3, **characterized in that** the biological layer (3) is made from MPC cement (Magnesium-Phosphate Cement), the content of which is comprised between 275 and 375 kg/m³, and the water/cement ratio is comprised between 0.2 and 0.5.

7. The cement-based multilayer assembly used as a biological support for building facades or other structures according to claim 1, **characterized in that** the binder has a phosphate source and a magnesium source, said sources being ammonium dihydrogen phosphate and magnesium oxide, respectively.

8. The cement-based multilayer assembly used as a biological support for building facades or other structures according to claim 7, **characterized in that** the phosphate-magnesium ratio is comprised between 1:1.5 and 1:2.5.

9. The cement-based multilayer assembly used as a biological support for building facades or other structures according to any of previous claims, **characterized in that** the mortar or concrete of the biological layer (3) includes aggregates of the siliceous or expanded clay type, the maximum size of which not exceeding one quarter of the thickness of the layer.

10. The cement-based multilayer assembly used as a biological support for building facades or other structures according to any previous claim, **characterized in that** the structural concrete layer (1) is formed by conventional reinforced concrete or concrete with structural fibers.

## Patentansprüche

1. Zementbasierte Mehrschichtanordnung als biologischer Träger für Gebäudefassaden oder andere Strukturen, umfassend mindestens eine herkömmliche Betonstrukturschicht (1), die den vorgegebenen Projektanforderungen entspricht und gegebenenfalls neu ausgeführt werden kann, und mindestens eine biologische Schicht (3) aus einem zementbasierten Material;
wobei das genannte zementbasierte Material einen niedrigen pH-Wert in einem Bereich zwischen 5,5 und 8 aufweist, der für die Besiedlung und Adhäsion bestimmter Familien biologischer Organismen und zur Wasserretention geeignet ist, und ferner eine Abdichtungs- und Befestigungsschicht (2) zwischen der Strukturschicht (1) und der biologischen Schicht (3) umfasst;
**dadurch gekennzeichnet, dass**
das zementbasierte Material mit niedrigem pH-Wert in einem Bereich zwischen 5,5 und 8 ein chemisches Additiv vom Typ Verzögerer oder Säure enthält, das einen pH-Wert zwischen 5,5 und 8 ermöglicht und darüber hinaus die Reaktionskinetik kontrolliert.

2. Zementbasierte Mehrschichtanordnung als biologischer Träger für Gebäudefassaden oder andere Strukturen nach Anspruch 1, **dadurch gekennzeichnet, dass** sie außerdem mindestens eine in eine Richtung abdichtende Deckschicht (4) umfasst, die auf der biologischen Schicht (3) aufgebracht ist und Hohlräume (5) aufweist, in denen die biologische Schicht (3) in direktem Kontakt mit der Umgebung ist.

3. Zementbasierte Mehrschichtanordnung als biologischer Träger für Gebäudefassaden oder andere Strukturen nach Anspruch 2, **dadurch gekennzeichnet, dass** die Deckschicht (4) aus einem Material besteht, das zur Abdichtung in eine Richtung ausgelegt ist.

4. Zementbasierte Mehrschichtanordnung als biologischer Träger für Gebäudefassaden oder andere Strukturen nach einem der Ansprüche 1-3, **dadurch gekennzeichnet, dass** die biologische Schicht (3) aus Mörtel oder Beton auf Basis eines herkömmlichen Zements besteht, dessen Gehalt zwischen 275 und 375 kg/m³ beträgt, und das Wasser/Zement-Verhältnis zwischen 0,3 und 0,6 liegt.

5. Zementbasierte Mehrschichtanordnung als biologischer Träger für Gebäudefassaden oder andere Strukturen einem der vorstehenden Ansprüche, **dadurch gekennzeichnet, dass** das Säureadditiv Oxalsäure, die in Gewichtsprozenten des Zements zwischen 10 und 13 % vorliegt, oder Borax, das in Gewichtsprozenten des Zements zwischen 5 und 8 % vorliegt ist.

6. Zementbasierte Mehrschichtanordnung als biologischer Träger für Gebäudefassaden oder andere Strukturen nach einem der Ansprüche 1-3, **dadurch gekennzeichnet, dass** die biologische Schicht (3) aus MPC (Magnesiumphosphat-Zement) mit einem Gehalt von 275 bis 375 kg/m³ besteht und das Wasser/Zement-Verhältnis zwischen 0,2 und 0,5 liegt.

7. Zementbasierte Mehrschichtanordnung als biologischer Träger für Gebäudefassaden oder andere Strukturen nach Anspruch 1, **dadurch gekennzeichnet, dass** das Bindemittel eine Phosphatquelle und eine Magnesiumquelle aufweist, wobei die genannten Quellen Ammoniumdihydrogenphosphat bzw. Magnesiumoxid sind.

8. Zementbasierte Mehrschichtanordnung als biologischer Träger für Gebäudefassaden oder andere Strukturen nach Anspruch 7, **dadurch gekennzeichnet, dass** das Phosphat-Magnesium-Verhältnis zwischen 1:1,5 und 1:2,5 liegt.

9. Zementbasierte Mehrschichtanordnung als biologischer Träger für Gebäudefassaden oder andere Strukturen nach einem der vorstehenden Ansprüche, **dadurch gekennzeichnet, dass** der Mörtel oder Beton der biologischen Schicht (3) Zuschläge vom Typ Kieselsäure oder Blähton enthält, deren maximale Größe ein Viertel der Schichtdicke nicht überschreitet.

10. Zementbasierte Mehrschichtanordnung als biologischer Träger für Gebäudefassaden oder andere Strukturen nach einem der vorstehenden Ansprüche, **dadurch gekennzeichnet, dass** die herkömmliche Betonstrukturschicht (1) aus herkömmlichem Stahlbeton oder Beton mit Strukturfasern besteht.

## Revendications

1. Un ensemble multicouche à base de ciment utilisé comme support biologique pour construire des façades ou autres structures, comportant au moins une couche de béton structurelle conventionnelle (1) qui remplit les conditions requises du projet spécifié et peut optionnellement être nouvellement installé et au moins une couche biologique (3) faite en un matériau à base de ciment ;
ce matériau à base de ciment possède un pH bas compris dans une gamme de 5.5 et 8 approprié pour la colonisation et adhésion de certaines familles d'organismes biologiques et pour retenir l'eau et en outre comportant une couche d'imperméabilisation et d'ancrage (2) entre la couche structurelle (1) et la couche biologique (3) ;
**caractérisé en ce que**
le matériau à base de ciment ayant un pH bas compris dans une gamme entre 5.5 et 8 comprend un additif chimique du type acide ou retardateur qui permet d'obtenir un pH compris entre 5.5 et 8 et qui en outre contrôle la cinétique de réaction.

2. L'ensemble multicouche à base de ciment utilisé comme support biologique pour construire des façades ou autres structures conformément à la revendication 1, **caractérisé en ce qu'**il comporte en outre au moins une couche de revêtement imperméable unidirectionnelle (4) qui est superposée sur la couche biologique (3) et possède des cavités (5) dans lesquelles la couche biologique (3) est en contact direct avec l'environnement.

3. L'ensemble multicouche à base de ciment utilisé comme support biologique pour construire des façades ou autres structures conformément à la revendication 2, **caractérisé en ce que** la couche de revêtement (4) est faite en un matériau approprié pour offrir une imperméabilisation unidirectionnelle.

4. L'ensemble multicouche à base de ciment utilisé comme support biologique pour construire des façades ou autres structures conformément à une quelconque des revendications 1-3, **caractérisé en ce que** la couche biologique (3) est faite en mortier ou béton produit à base de ciment conventionnel, dont le contenu comprend entre 275 et 375 kg/m³ et le ratio eau/ciment est compris entre 0,3 et 0,6.

5. L'ensemble multicouche à base de ciment utilisé comme support biologique pour construire des façades ou autres structures conformément à une quelconque des revendications précédentes, **caractérisé en ce que** l'additif acide est l'acide oxalique qui se trouve en pourcentages par poids de ciment entre 10 et 13%, ou le borax, qui se trouve en pourcentages par poids de ciment entre 5 et 8%.

6. L'ensemble multicouche à base de ciment utilisé comme support biologique pour construire des façades ou autres structures conformément à une quelconque des revendications 1-3, **caractérisé en ce que** la couche biologique (3) est faite en ciment CMP (Ciment de Magnésium Phosphate), dont le contenu est compris entre 275 et 375 kg/m³, et le ratio eau/ciment est compris entre 0,2 et 0,5.

7. L'ensemble multicouche à base de ciment utilisé comme support biologique pour construire des façades ou autres structures conformément à la revendication 1, **caractérisé en ce que** le liant possède une source de phosphate et une source de magnésium, ces sources étant du phosphate de dihydrogène d'ammonium et de l'oxyde de magnésium, respectivement.

8. L'ensemble multicouche à base de ciment utilisé comme support biologique pour construire des façades ou autres structures conformément à la revendication 7, **caractérisé en ce que** le ratio de phosphate-magnésium est compris entre 1 :1,5 et 1 :2,5.

9. L'ensemble multicouche à base de ciment utilisé comme support biologique pour construire des façades ou autres structures conformément à une quelconque des revendications précédentes, **caractérisé en ce que** le mortier ou le béton de la couche biologique (3) comprend des agrégats du type siliceux ou argile expansée, dont la taille maximum ne dépasse pas un quart de la grosseur de la couche.

10. L'ensemble multicouche à base de ciment utilisé comme support biologique pour construire des façades ou autres structures conformément à une quelconque des revendications précédentes, **caractérisé en ce que** la couche en béton structurelle (1) est formée par du béton armé conventionnel ou du béton ayant des fibres structurelles.
